# EUROPÄISCHE PATENTANMELDUNG

(11) **EP 2 306 133 A1**
(43) Veröffentlichungstag der Anmeldung: **06.04.2011**
(21) Anmeldenummer: 09012429.8
(22) Anmeldetag: 30.09.2009
(51) Int. Cl.: F28D 20/00, F24H 1/18

(54) **Wärmespeicher**

(71) Anmelder: Roth Werke GmbH, 35232 Dautphetal (DE)
(72) Erfinder:
(74) Vertreter: Rohmann, Michael

(57) **Zusammenfassung**

Wärmespeicher mit einem Innenbehälter zur Aufnahme eines Wärmeträgermediums, wobei der Innenbehälter zwei gegenüberliegende großflächige Seitenwände sowie weitere kleinflächige Seitenwände aufweist. Auf der Außenoberfläche jeder großflächigen Seitenwand ist zumindest ein Versteifungselement aufgebracht. Die Wandstärke jedes Versteifungselementes beträgt zumindest bereichsweise zumindest das Doppelte der Wandstärke der zugeordneten großflächigen Seitenwand des Innenbehälters. Die Versteifungselemente sind durch Umwickeln oder Umhüllendes Aggregates aus Versteifungselementen und Innenbehälter mit einem Bandagenmaterial an dem Innenbehälter fixiert.

## Beschreibung

Die Erfindung betrifft einen Wärmespeicher mit einem Innenbehälter zur Aufnahme eines Wärmeträgermediums. Bei dem Wärmeträgermedium handelt es sich insbesondere um ein fluides Wärmeträgermedium und vorzugsweise um ein flüssiges Wärmeträgermedium.

Wärmespeicher der vorgenannten Art sind aus der Praxis in verschiedenen Ausführungsformen bekannt. Sie werden in vielen Bereichen der Technik, insbesondere in der Gebäudetechnik eingesetzt. Derartige Wärmespeicher bzw. deren Behälter werden bevorzugt aus Stahl hergestellt. Wärmespeicher aus Kunststoff sind weniger verbreitet und werden vorwiegend in drucklosen Anwendungen eingesetzt. Druckbeaufschlagte Wärmespeicher werden normalerweise zylindrisch ausgebildet und an den Stirnenden mit flachen oder kesselbodenförmigen Deckeln verschlossen. Die durch den Innendruck auf die Behälterwände wirkenden Spannungen lassen sich durch zylindrische oder kugelige Wandungen effektiv abfangen. Die zu erwartenden Verformungen sind hier über den gesamten Umfang relativ gering und gleichmäßig verteilt, so dass sie vernachlässigt werden können. Zylindrische Wärmespeicher sind aber für bestimmte Verwendungen nicht geeignet und hier werden Wärmespeicher in flacher Bauweise bevorzugt. Solche flachen Wärmespeicher - beispielsweise in quaderförmiger Ausgestaltung - weisen normalerweise zwei größerflächige bzw. zwei großflächige gegenüberliegende Seitenwände auf. Bei solchen flachen druckbeaufschlagten Wärmespeichem neigt der entsprechende Behälter bei aufgenommenem Wärmeträgermedium aufgrund der bauformbedingten geringeren Steifigkeit zu Ausbeulung insbesondere an den großflächigen Seitenwänden. Das ist natürlich unerwünscht.

Demgegenüber liegt der Erfindung das technische Problem zugrunde, einen Wärmespeicher der eingangs genannten Art anzugeben, dessen zugeordneter Behälter für das Wärmeträgermedium eine flache Bauweise mit zwei gegenüberliegenden großflächigen Seitenwänden aufweist, der insbesondere aus Kunststoff besteht und bei dem Verformungen, vor allem Verformungen der großflächigen Seitenwände bei Druckbeaufschlagung effektiv vermieden werden können. Zugleich soll der Wärmespeicher eine wirksame thermische Isolierung und somit eine effektive Wärmespeicherung gewährleisten.

Zur Lösung dieses technischen Problems lehrt die Erfindung einen Wärmespeicher mit einem Innenbehälter zur Aufnahme eines Wärmeträgermediums, wobei der Innenbehälter zwei gegenüberliegende großflächige Seitenwände sowie weitere kleinflächige Seitenwände aufweist,
wobei auf der Außenoberfläche (Außenseite) jeder großflächigen Seitenwand zumindest ein Versteifungselement flächig aufgebracht ist,
wobei die Wandstärke jedes Versteifungselementes zumindest bereichsweise zumindest das doppelte, vorzugsweise zumindest das dreifache der Wandstärke der zugeordneten großflächigen Seitenwand des Innenbehälters beträgt
und wobei die Versteifungselemente durch Umwickeln oder Umhüllen des Aggregates aus Versteifungselementen und Innenbehälter mit einem Bandagenmaterial - vorzugsweise durch Umwickeln oder Umhüllen mit einem (ersten) Faserverbundmaterial - an dem Innenbehälter fixiert sind bzw. kraftschlüssig fixiert sind.

Es liegt im Rahmen der Erfindung, dass es sich bei dem Wärmeträgermedium um ein fluides Medium und insbesondere um ein flüssiges Medium handelt, beispielsweise um Wasser oder um eine wässrige Lösung oder um eine wässrige Mischung. - Großflächige Seitenwände meint im Rahmen der Erfindung, dass diese Seitenwände zumindest eine doppelt so große Fläche aufweisen wie jede der kleinflächigen Seitenwände des Innenbehälters.

Zweckmäßigerweise werden die Versteifungselemente lediglich lose auf die großflächigen Seitenwände aufgelegt und dann durch Umwickeln bzw. Umhüllen mit dem Bandagenmaterial an dem Innenbehälter fixiert. Nach einer bevorzugten Ausführungsform der Erfindung werden die Versteifungselemente nur lokal an den großflächigen Seitenwänden vorgesehen und nicht an den kleinflächigen Seitenwänden des Innenbehälters. Empfohlenermaßen laufen die Versteifungselemente also nicht über den Umfang des Innenbehälters um. - Die im Patentanspruch 1 genannte Wandstärke der Versteifungselemente wird bei auf den Innenbehälter aufgelegten Versteifungselementen quer bzw. senkrecht zur zugeordneten großflächigen Seitenwand des Innenbehälters gemessen.

Das Aggregat aus Innenbehälter und aufgelegten Versteifungselementen wird durch das darum gewickelte bzw. durch das das. Aggregat umhüllende Bandagenmaterial bzw. die daraus resultierende Bandagenschicht zusammengehalten. Das Bandagenmaterial besteht nach empfohlener Ausführungsform der Erfindung aus Faserverbundmaterial und insbesondere aus Faser-Kunststoff-Verbundmaterial. Bei einem solchen Faser-Kunststoff-Verbundmaterial sind Fasern bzw. Verstärkungsfasern in einer Kunststoffmatrix eingebettet, vorzugsweise in einer Matrix aus thermoplastischem Kunststoff eingebettet. Bei den Fasem des Faserverbundmaterials handelt es sich um zumindest eine Faserart aus der Gruppe "Glasfasem, Kohlenstofffasern, Aramidfasern, Kunststofffasem, Metallfasem". Gemäß einer bevorzugten Ausführungsvariante der Erfindung wird ein Faserverbundmaterial aus Fasern in einer thermoplastischen Kunststoffmatrix vor dem Umwickeln bzw. Umhüllen des Aggregates aus Innenbehälter und Versteifungselementen erwärmt, so dass bereits beim Umwickeln bzw. Umhüllen des Aggregates der thermoplastische Kunststoff des Faserverbundmaterials auf das Aggregat aufgeschmolzen wird. Im Rahmen dieser Ausführungsform bestehen die Versteifungselemente und/oder Innenbehälter aus Kunststoff, so dass der thermoplastische Kunststoff des Faserverbundmaterials auf diesen Kunststoff aufgeschmolzen wird. Damit ergibt sich eine besonders effektive Bandagenumwicklung bzw. Bandagenumhüllung.

Eine sehr bevorzugte Ausführungsform der Erfindung ist **dadurch gekennzeichnet, dass** der Innenbehälter mehreckig ausgebildet ist und vorzugsweise abgerundete Ecken und/oder abgerundete Kanten aufweist. Zweckmäßigerweise ist der Innenbehälter quaderförmig bzw. im Wesentlichen quaderförmig ausgebildet und bevorzugt sind die Ecken und/oder die Kanten dieses Quaders abgerundet ausgeführt. Die sechs Seitenflächen dieses Quaders können auch nach außen gewölbt ausgebildet sein. Es liegt im Rahmen der Erfindung, dass ein flacher, quaderförmiger Innenbehälter für einen erfindungsgemäßen Wärmespeicher in flacher Bauweise zwei gegenüberliegende großflächige Seitenwände sowie vier weitere kleinflächige Seitenwände aufweist.

Nach einer weiteren Ausführungsform der Erfindung ist der Innenbehälter im Querschnitt ovalförmig ausgebildet und hat vorzugsweise im Querschnitt die Form eines langgestreckten Ovals. Die beiden gegenüberliegenden großflächigen Seitenwände sind dann an den langen Seiten des Ovals bzw. an den zugehörigen Flächen vorgesehen. Zur Herstellung des Innenbehälters können nach einer Ausführungsvariante Abschnitte von einem längeren im Querschnitt ovalförmigen Rohr abgelängt werden und jeder Abschnitt wird dann zur Realisierung des Innenbehälters an seinen Stirnenden mit Abschlusskappen verschlossen.

Es liegt im Rahmen der Erfindung, dass das Verhältnis der Fläche von zumindest einer, empfohlenermaßen von jeder der beiden großflächigen Seitenwände des Innenbehälters zu der Fläche jeder der kleinflächigen Seitenwände des Innenbehälters mindestens 1,5:1, vorzugsweise mindestens 2:1 bevorzugt mindestens 2,5:1 und besonders bevorzugt mindestens 3:1 beträgt. Auf diese Weise erhält man bei vorgegebenem Behältervolumen einen Innenbehälter in flacher Bauweise, so dass auch der zugeordnete Wärmespeicher in flacher Bauweise gehalten werden kann.

Es liegt im Rahmen der Erfindung, dass der Innenbehälter aus Kunststoff bzw. aus thermoplastischem Kunststoff besteht. Eine besonders bevorzugte Ausführungsform der Erfindung ist **dadurch gekennzeichnet, dass** der Innenbehälter durch Blasformen oder durch Rotationsformen hergestellt ist. Bei der Herstellung durch Blasformen wird zweckmäßigerweise ein Kunststoffschlauch in eine Blasform eingebracht und der Innenbehälter wird dann durch Blasformen des Kunststoffschlauches erzeugt. Bei der Herstellung des Innenbehälters durch Rotationsformen wird zweckmäßigerweise eine flüssige und/oder pulverförmige Formmasse in eine Rotationsform gefüllt und der Innenbehälter wird dann durch Rotationsformen aus der Formmasse erzeugt. Die in die Rotationsform eingebrachte flüssige und/oder pulverförmig Formmasse enthält vorzugsweise zumindest einen thermoplastischen Kunststoff. - Empfohlenermaßen besteht der Innenbehälter aus Polyolefin bzw. im Wesentlichen aus Polyolefin und vorzugsweise aus Polypropylen und/oder Polyethylen bzw. im Wesentlichen aus Polypropylen und/oder Polyethylen. - Nach einer Ausführungsvariante der Erfindung kann in den Wärmespeicher bzw. in den Innenbehälter zumindest ein Wärmetauscher integriert sein.

Nach bevorzugter Ausgestaltung der Erfindung ist der Innenbehälter auf seiner Außenoberfläche mit einer Verstärkungsschicht versehen und diese Verstärkungsschicht ist folglich zwischen den Versteifungselementen und dem Innenbehälter angeordnet. Vorzugsweise ist die Verstärkungsschicht durch Umwickeln oder Umhüllen des Innenbehälter bzw. der Außenoberfläche des Innenbehälters mit einem (zweiten) Faserverbundmaterial erzeugt. Bei dem Faserverbundmaterial handelt es sich vorzugsweise um ein Faser-Kunststoff-Verbundmaterial. Das zweite Faserverbundmaterial kann mit dem ersten Faserverbundmaterial identisch sein, mit dem das Aggregat aus Innenbehälter und Versteifungselementen umwickelt bzw. umhüllt wird. Faser-Kunststoff-Verbundmaterial meint auch hier, dass Fasern bzw. Verstärkungsfasern in eine Kunststoffmatrix und insbesondere in eine Matrix aus thermoplastischem Kunststoff eingebettet sind. Bei den Fasern handelt es sich zweckmäßigerweise um zumindest eine Faserart aus der Gruppe "Glasfasem, Kohlenstofffasem, Aramidfasern, Kunststofffasem, Metallfasem". Gemäß einer Ausführungsvariante der Erfindung wird das zweite Faserverbundmaterial aus den Fasern und der thermoplastischen Kunststoffmatrix vor dem Umwickeln bzw. Umhüllen des Innenbehälters erwärmt, so dass bereits beim Umwickeln bzw. Umhüllen des Innenbehälters der thermoplastische Kunststoff, der in dem Faserverbundmaterial enthalten ist, auf den Innenbehälter aufgeschmolzen wird. Es empfiehlt sich dabei, dass der Innenbehälter aus Kunststoff bzw. aus thermoplastischem Kunststoff besteht. - Nach einer Ausgestaltung der Erfindung entspricht die Wandstärke der Verstärkungsschicht (aus dem Faserverbundmaterial) der Wandstärke des Innenbehälters bzw. etwa der Wandstärke des Innenbehälters. Vorzugsweise ist die Wandstärke der Verstärkungsschicht zumindest bereichsweise geringer bzw. deutlich geringer als die Wandstärke der Versteifungselemente.

Vorstehend wurde erläutert, dass die Verstärkungsschicht gemäß bevorzugter Ausführungsform durch Umwickeln bzw. Umhüllen des Innenbehälters mit einem Faserverbundmaterial erzeugt wird. Die Verstärkungsschicht kann auch aus mehreren, vorzugsweise aus zwei vorgefertigten Teilen gebildet werden und zweckmäßigerweise mit der Außenoberfläche des Innenbehälters verbunden werden. Diese vorgefertigten Teile können bei der Herstellung des Innenbehälters im Zuge des Blasformens bzw. Rotationsformens in die Blasform bzw. Rotationsform eingelegt werden.

Es empfiehlt sich, dass das zumindest eine einer großflächigen Seitenwand zugeordnete Versteifungselement zumindest 50 %, insbesondere zumindest 60 %, vorzugsweise zumindest 70 %, zweckmäßigerweise zumindest 75 % und bevorzugt zumindest 80 % der Fläche der zugeordneten großflächigen Seitenwand abdeckt. Nach einer sehr bevorzugten Ausführungsform der Erfindung ist einer großflächigen Seitenwand lediglich ein flächiges Versteifungselement zugeordnet. Es ist grundsätzlich auch möglich, dass mehrere, beispielsweise zwei oder drei benachbarte Versteifungselemente vorgesehen sind, die sich zu einem der großflächigen Seitenwand zugeordneten Versteifungsaggregat ergänzen.

Vorzugsweise nimmt die Wandstärke eines auf einer großflächigen Seitenwand aufgebrachten Versteifungselementes von zumindest zwei gegenüberliegenden Seiten der zugeordneten großflächigen Seitenwand zur Mitte dieser Seitenwand hin zu und bevorzugt nimmt die Wandstärke zur Mitte der Seitenwand hin kontinuierlich zu. Empfohlenermaßen hat das Versteifungselement also in der Mitte der zugeordneten großflächigen Seitenwand die größte Wandstärke, die dann zu zumindest zwei gegenüberliegenden Seiten der großflächigen Seitenwand hin abnimmt. Bezüglich des Materials der Versteifungselemente findet sich empfohlenermaßen eine Materialanhäufung in der Mitte der zugeordneten großflächigen Seitenwand. Es liegt im Rahmen der Erfindung, dass die Versteifungselemente formschlüssig auf den zugeordneten großflächigen Seitenwänden aufliegen bzw. auf der Verstärkungsschicht der großflächigen Seitenwände aufliegen. Zweckmäßigerweise sind die Versteifungselemente jeweils konvex nach außen gewölbt ausgebildet, so dass eine Materialanhäufung in der Mitte der zugeordneten großflächigen Seitenwand resultiert. Eine empfohlene Ausführungsform der Erfindung ist **dadurch gekennzeichnet, dass** die Versteifungselemente konvex nach außen gewölbt ausgebildet sind und dass das Bandagenmaterial bzw. das erste Faserverbundmaterial vorzugsweise entlang der Wölbung bzw. parallel zur Wölbung der Versteifungselemente um das Aggregat aus Innenbehälter und Versteifungselementen gewickelt wird. Es findet dann also gleichsam ein tangentiales Umwickeln der Versteifungselemente statt. Gemäß einer Ausführungsvariante erfolgt das Umwickeln bzw. Umhüllen mit dem Bandagenmaterial bzw. mit dem ersten Faserverbundmaterial ausschließlich bzw. im Wesentlichen ausschließlich tangential zu der Wölbung der Versteifungselemente und nicht quer zu dieser Wölbung.

Es liegt im Rahmen der Erfindung, dass die Versteifungselemente aus Kunststoff, bevorzugt aus Kunststoffschaum bestehen. Nach einer Ausführungsform handelt es sich dabei um faserverstärkten Kunststoff bzw. um faserverstärkten Kunststoffschaum. Empfohlenermaßen bestehen die Versteifungselemente aus Polystyrolschaum, insbesondere EPS-Schaum und/oder aus Polyurethanschaum. Wenn die Versteifungselemente gemäß der sehr bevorzugten Ausführungsform aus Kunststoff bzw. aus Kunststoffschaum bestehen, tragen sie nicht nur zur Versteifung sondern effektiv auch zur Wärmedämmung des Innenbehälters und zur Gewichtsreduzierung im Vergleich zu metallischen Versteifungselementen bei.

Zur Lösung des technischen Problems lehrt die Erfindung weiterhin einen Wärmespeicher mit einem Innenbehälter zur Aufnahme eines Wärmeträgermediums, wobei der Innenbehälter zwei gegenüberliegende großflächige Seitenwände sowie weitere kleinflächige Seitenwände aufweist und wobei die Innenoberflächen der großflächigen Seitenflächen durch verstärkungsfaserhaltige flächige Verstärkungselemente flächig verstärkt sind. Zweckmäßigerweise handelt es sich bei den flächigen Verstärkungselementen um Matten aus Faser-Kunststoff-Verbundmaterial. Vorzugsweise weist dieses Faser-Kunststoff-Verbundmaterial die Eigenschaften bzw. Komponenten auf, die oben zu dem ersten Faserverbundmaterial für die Bandage bzw. zu dem zweiten Faserverbundmaterial für die Verstärkungsschicht angegeben wurden. Empfohlenermaßen werden die flächigen Verstärkungselemente als vorgefertigte Komponenten im Zuge der Herstellung des Innenbehälters an den Innenoberflächen der großflächigen Seitenwände des Innenbehälters fixiert. Die Fixierung kann beispielsweise im Zuge des Blasformens oder Rotationsformens erfolgen.

Eine besonders bevorzugte Ausführungsform der Erfindung ist **dadurch gekennzeichnet, dass** in zumindest einer der beiden gegenüberliegenden großflächigen Seitenwände des Innenbehälters eine Mehrzahl von Vertiefungen ausgebildet ist und dass die Böden der Vertiefungen mit der Innenseite der gegenüberliegenden großflächigen Seitenwand des Innenbehälters verbunden sind, vorzugsweise verschweißt sind. Es empfiehlt sich insbesondere, dass in beiden gegenüberliegenden großflächigen Seitenwänden jeweils eine Mehrzahl von Vertiefungen ausgebildet ist und dass die Böden der Vertiefungen in der einen großflächigen Seitenwand mit den Böden der Vertiefungen in der anderen großflächigen Seitenwand verbunden sind, vorzugsweise verschweißt sind. Es handelt sich bei den erfindungsgemäßen Vertiefungen gleichsam um Versteifungsvertiefungen, die den Innenbehälter zusätzlich stabilisieren bzw. versteifen. Vorzugsweise sind die Vertiefungen über die Fläche der zugeordneten großflächigen Seitenwand verteilt angeordnet, bevorzugt gleichmäßig verteilt angeordnet. Zweckmäßigerweise weisen benachbarte Vertiefungen gleiche Abstände bzw. im Wesentliche gleiche Abstände voneinander auf. Wenn nach besonders bevorzugter Ausführungsform in beiden gegenüberliegenden großflächigen Seitenwänden Vertiefungen ausgebildet sind, entspricht die Tiefe der Vertiefungen auf der einen Seite empfohlenermaßen der Tiefe der Vertiefungen auf der anderen Seite bzw. im Wesentlichen der Tiefe der Vertiefungen auf der anderen Seite. Zweckmäßigerweise haben alle Vertiefungen einer großflächigen Seitenwand die gleiche Tiefe bzw. im Wesentlichen die gleiche Tiefe. Es liegt im Rahmen der Erfindung, dass in einer großflächigen Seitenwand zumindest vier Vertiefungen, vorzugsweise zumindest acht Vertiefungen ausgebildet sind. Empfohlenermaßen sind die Böden der Vertiefungen einer großflächigen Seitenwand über Schraubverbindungen mit der Innenseite der gegenüberliegenden großflächigen Seitenwand bzw. mit den Böden von Vertiefungen in der gegenüberliegenden großflächigen Seitenwand verbunden. Eine sehr bevorzugte Ausführungsform der Erfindung ist **dadurch gekennzeichnet, dass** die Böden der Vertiefungen in einer großflächigen Seitenwand mit der Innenseite der gegenüberliegenden großflächigen Seitenwand bzw. mit den Böden der Vertiefungen in der gegenüberliegenden großflächigen Seitenwand sowohl durch eine Schweißverbindung als auch durch eine Schraubverbindung verbunden sind.

Der Erfindung liegt die Erkenntnis zugrunde, dass Wärmespeicher bzw. deren Innenbehälter aus Kunststoff in flacher Bauweise ohne Probleme auch in druckbeaufschlagten Anwendungen eingesetzt werden können, wenn die erfindungsgemäßen Merkmale verwirklicht werden. Mit den erfindungsgemäßen Maßnahmen kann eine sehr effektive und funktionssichere Versteifung bzw. Verstärkung der großflächigen Seitenwände eines flachen Behälters bzw. eines flachen Wärmespeichers erfolgen. Unerwünschte Verformungen bzw. Ausbeulungen der Seitenwände des Behälters bzw. des Wärmespeichers aufgrund von Druckbeaufschlagung können wirksam vermieden werden. Hervorzuheben ist, dass dies mit relativ einfachen und wenig aufwändigen erfindungsgemäßen Maßnahmen erreicht wird. Sowohl von der Herstellungsart als auch von der Materialauswahl her kann der erfindungsgemäße Wärmespeicher mit verhältnismäßig geringen Kosten realisiert werden. Außerdem kann mit den erfindungsgemäßen Maßnahmen auch eine funktionssichere Wärmedämmung des Wärmespeichers sowie eine effektive Gewichtsreduzierung gegenüber Wärmespeichern aus Stahl erzielt werden. Die erfindungsgemäße Ausgestaltung des Wärmespeichers bzw. der Wände/Seitenwände des Wärmespeichers bedingt eine überraschend effektive thermische Isolierung und somit eine optimale Wärmespeicherung.

Nachfolgend wird die Erfindung anhand einer lediglich ein Ausführungsbeispiel darstellenden Zeichnung näher erläutert. Es zeigen in schematischer Darstellung:
- Fig. 1: eine perspektivische Darstellung (aufgebrochen) eines erfindungs- gemäßen Wärmespeichers in einer ersten Ausführungsform,
- Fig. 2: den Gegenstand gemäß Fig. 1 in einer zweiten Ausführungsform,
- Fig. 3: einen Querschnitt durch den Gegenstand nach Fig. 1,

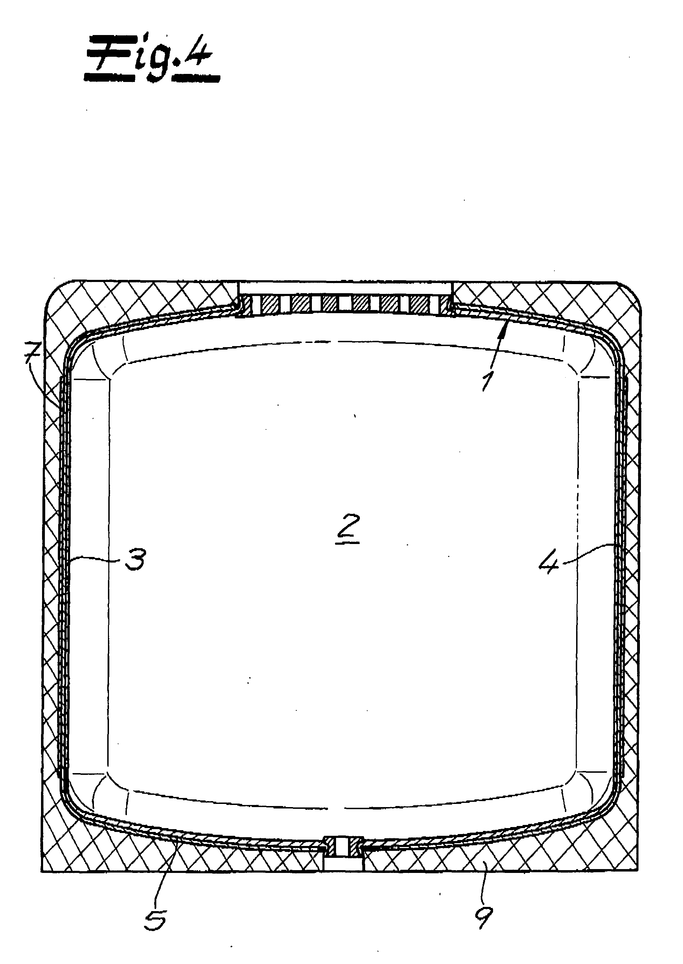

- Fig. 4: einen Längsschnitt durch den Gegenstand gemäß Fig. 1,
- Fig. 5: ausschnittsweise eine perspektivische Ansicht einer Ausführungs- form eines Innenbehälters und
- Fig. 6: einen Schnitt durch den Gegenstand nach Fig. 5.

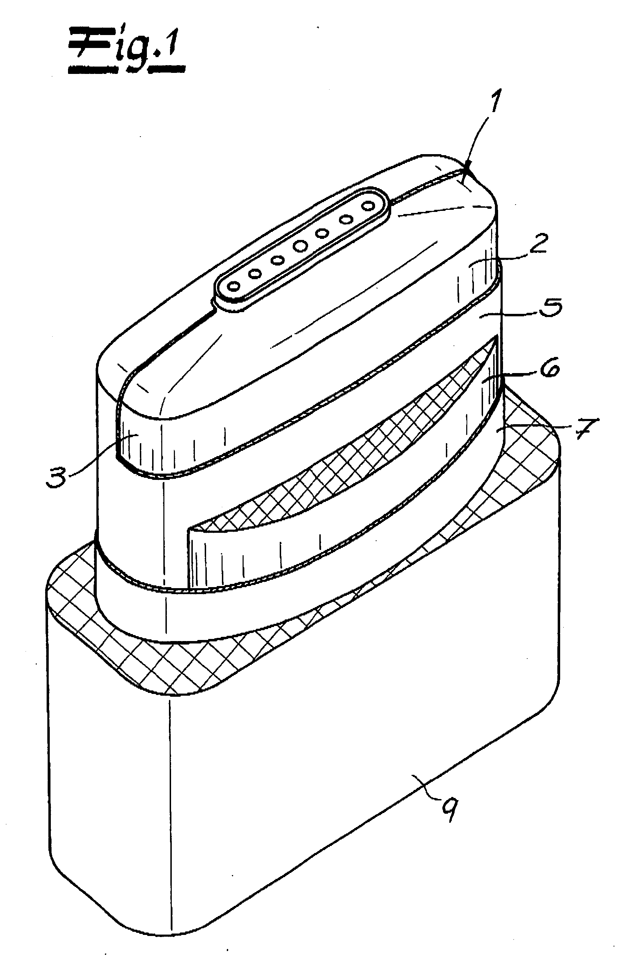

Der in den Figuren dargestellte erfindungsgemäße Wärmespeicher weist einen Innenbehälter 1 zur Aufnahme eines Wärmeträgermediums auf, wobei der Innenbehälter 1 zweckmäßigerweise aus thermoplastischem Kunststoff besteht. Im Ausführungsbeispiel nach Fig. 1 ist der Innenbehälter 1 im Querschnitt rechteckförmig mit abgerundeten Ecken ausgebildet. Gemäß Ausführungsbeispiel 2 ist der Innenbehälter 1 im Querschnitt ovalförmig bzw. in Form eines langgestreckten Ovals ausgebildet. Der Innenbehälter 1 weist zwei gegenüberliegende großflächige Seitenwände 2 sowie weitere kleinflächige Seitenwände 3, 4 auf. Die Fläche der großflächigen Seitenwände 2 beträgt empfohlenermaßen mindestens das Doppelte der Fläche jeder der kleinflächigen Seitenwände 3, 4. Vorzugsweise wird der Innenbehälter 1 durch Blasformen oder Rotationsformen hergestellt.

Zweckmäßigerweise und im Ausführungsbeispiel ist der Innenbehälter 1 auf seiner Außenoberfläche mit einer Verstärkungsschicht 5 versehen. Diese Verstärkungsschicht 5 wird bevorzugt durch Umwickeln des Innenbehälters 1 bzw. der Außenoberfläche des Innenbehälters 1 mit einem (zweiten) Faser-Kunststoff-Verbundmaterial erzeugt. Im Ausführungsbeispiel entspricht die Wandstärke der Verstärkungsschicht 5 in etwa der Wandstärke des Innenbehälters 1.

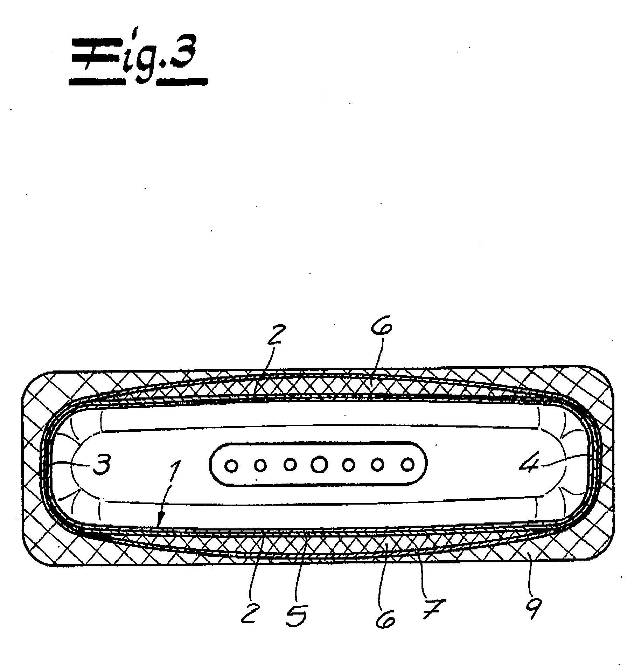

Auf der Außenoberfläche jeder großflächigen Seitenwand 2 bzw. auf der dort aufgebrachten Verstärkungsschicht 5 ist jeweils ein flächiges Versteifungselement 6 flächig aufgebracht. In den Fig. 1 bis 3 ist erkennbar, dass die Wandstärke der Versteifungselemente 6 zumindest in der Mitte der großflächigen Seitenwände 2 ein Mehrfaches bzw. ein Vielfaches der Wandstärke des Innenbehälters 1 und der Wandstärke der Verstärkungsschicht 5 beträgt. Die Versteifungselemente 6 liegen formschlüssig auf den großflächigen Seitenwänden 2 bzw. auf der dort aufgebrachten Verstärkungsschicht 5 auf. Die Wandstärke jedes aufgebrachten Versteifungselementes 6 nimmt von zwei gegenüberliegenden Seiten der zugeordneten großflächigen Seitenwand 2 zur Mitte dieser Seitenwand 2 hin kontinuierlich zu. Vorzugsweise und im Ausführungsbeispiel sind die Versteifungselemente 6 konvex nach außen gewölbt ausgebildet.

Im Ausführungsbeispiel werden die Versteifungselemente 6 durch Umwickeln des Aggregates aus Innenbehälter 1 und Versteifungselementen 6 mit einem (ersten) Faser-Kunststoff-Verbundmaterial als Bandagenmaterial 7 an dem Innenbehälter 1 kraftschlüssig fixiert. Vorzugsweise und im Ausführungsbeispiel erfolgt das Umwickeln mit dem Bandagenmaterial 7 bzw, mit dem (ersten) Faser-Kunststoff-Verbundmaterial lediglich parallel bzw. tangential zu der konvexen Wölbung und nicht quer dazu. In den Figuren ist außerdem erkennbar, dass die Versteifungselemente 6 ausschließlich an dem großflächigen Seitenwänden 2 und nicht an den kleinflächigen Seitenwänden 3, 4 angebracht sind. Die Versteifungselemente 6 bestehen im Ausführungsbeispiel aus EPS-Schaum. Dadurch wird zusätzlich zu der Versteifung der großflächigen Seitenwände 2 auch eine effektive Wärmedämmung für den Wärmespeicher und eine Gewichtsreduzierung im Vergleich zu metallischen Komponenten erreicht.

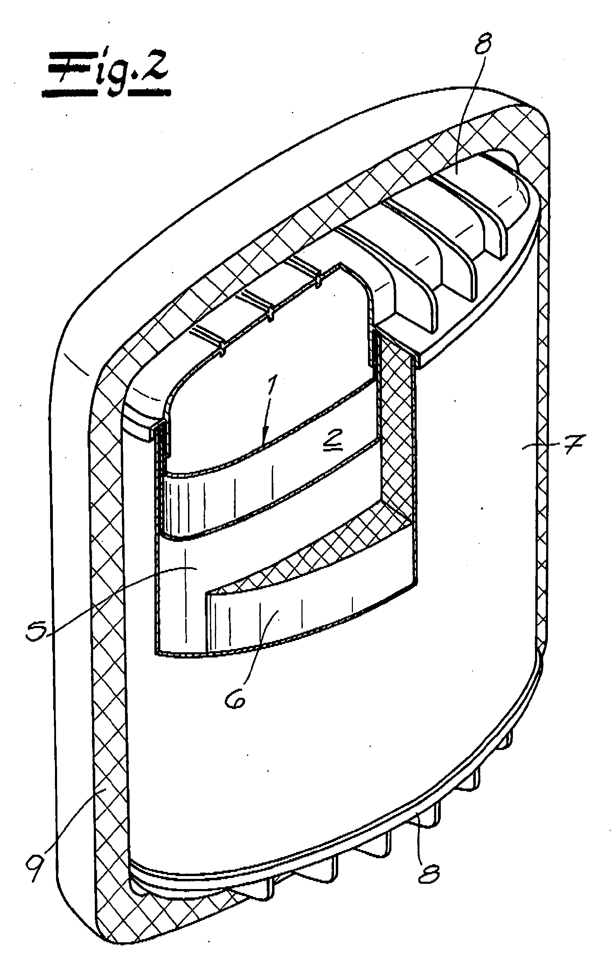

Der Innenbehälter 1 des Wärmespeichers gemäß Fig. 2 hat den Querschnitt eines lang gestreckten Ovals und ist dadurch hergestellt worden, dass ein entsprechender Abschnitt von einem im Querschnitt ovalförmigen Rohr abgelängt wurde. Anschließend wird die Verstärkungsschicht 5 aufgebracht und danach die Versteifungselemente 6 und schließlich wird das resultierende Aggregat mit dem Bandagenmaterial 7 umwickelt. An den Stirnenden dieses Aggregates sind im Ausführungsbeispiel nach Fig. 2 Verschlusskappen 8 vorgesehen bzw. fixiert. Die Verschlusskappen 8 greifen einerseits in den Innenbehälter 1 ein und übergreifen andererseits die Bandagenschicht aus dem Bandagenmaterial 7.

In den Figuren ist im Übrigen erkennbar, dass der Wärmespeicher zusätzlich eine Ummantelung 9 aufweist, die das Aggregat aus Innenbehälter 1, Verstärkungsschicht 5, Versteifungselementen 6 und Bandagenmaterial 7 umgibt. Die Ummantelung mag im Ausführungsbeispiel aus einem Schaumkunststoff bestehen.

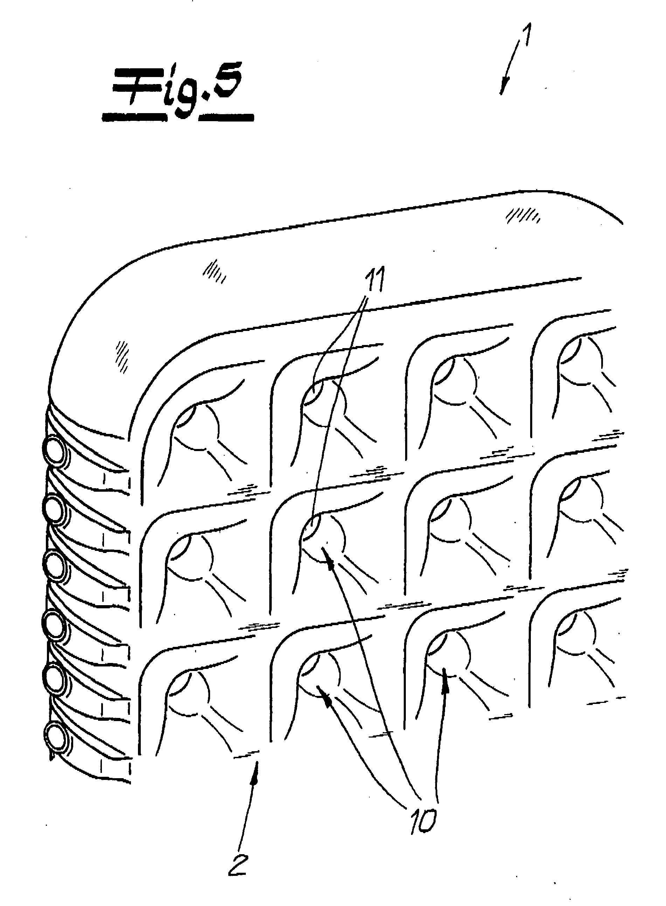

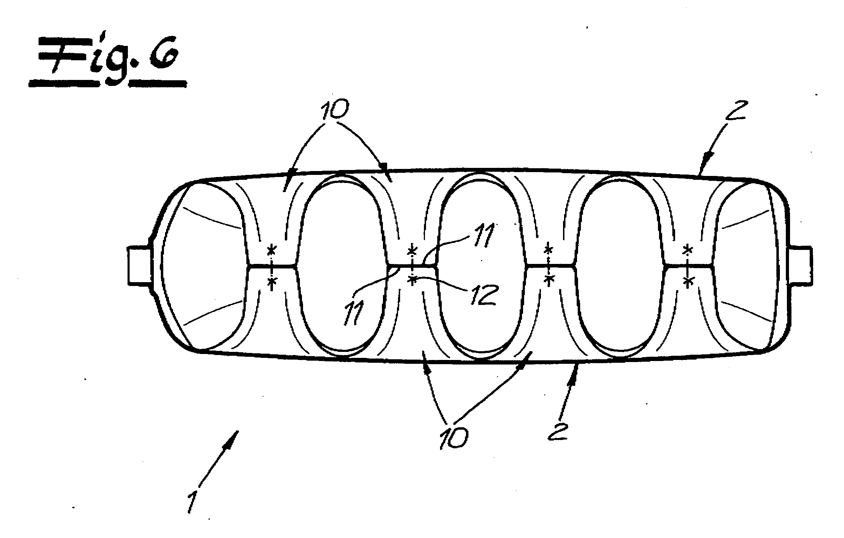

Die Fig. 5 und 6 zeigen eine bevorzugte Ausführungsform eines Innenbehälters 1 für einen erfindungsgemäßen Wärmespeicher. Vorzugsweise ist hier in beiden gegenüberliegenden großflächigen Seitenwänden 2 jeweils eine Mehrzahl von Vertiefungen 10 ausgebildet. Die Böden 11 der Vertiefungen 10 in einer großflächigen Seitenwand 2 sind zweckmäßigerweise mit den Böden 11 der Vertiefungen 10 in der anderen gegenüberliegenden großflächigen Seitenwand 2 verbunden und zwar empfohlenermaßen und im Ausführungsbeispiel sowohl verschweißt als auch durch eine Schraubverbindung 12 verbunden. In der Fig. 5 ist erkennbar, dass die Vertiefungen zweckmäßigerweise über die Fläche der zugeordneten großflächigen Seitenwand 2 gleichmäßig verteilt sind. Benachbarte Vertiefungen 10 weisen gleiche Abstände voneinander auf. Die Fig. 6 zeigt, dass nach bevorzugter Ausführungsform die Tiefe der Vertiefungen 10 in der einen großflächigen Seitenwand 2 der Tiefe der Vertiefungen 10 in der anderen gegenüberliegenden großflächigen Seitenwand entspricht. Die Vertiefungen 10 ragen also jeweils bis zur Mitte des Abstandes der beiden gegenüberliegenden großflächigen Seitenwände 2. Der Fig. 6 ist weiterhin entnehmbar, dass die Vertiefungen 10 vorzugsweise mit großen Radien bzw. vollen Radien und im Übergangsbereich zu der übrigen Fläche der zugeordneten großflächigen Seitenwand 2 ausgebildet sind.

## Patentansprüche

1. Wärmespeicher mit einem Innenbehälter (1) zur Aufnahme eines Wärmeträgermediums, wobei der Innenbehälter (1) zumindest zwei gegenüberliegende großflächige Seitenwände (2) sowie weitere kleinflächige Seitenwände (3, 4) aufweist,
wobei auf der Außenoberfläche jeder großflächigen Seitenwand (2) zumindest ein Versteifungselement (6) aufgebracht ist,
wobei die Wandstärke jedes Versteifungselementes (6) zumindest bereichsweise zumindest das Doppelte, vorzugsweise zumindest das Dreifache der Wandstärke der zugeordneten großflächigen Seitenwand (2) des Innenbehälters (1) beträgt
und wobei die Versteifungselemente (6) durch Umwickeln bzw. Umhüllen des Aggregates aus Versteifungselementen (6) und Innenbehälter (1) mit einem Bandagenmaterial (7), vorzugsweise durch Umwickeln bzw. Umhüllen mit einem (ersten) Faserverbundmaterial, an dem Innenbehälter (1) fixiert sind.

2. Wärmespeicher nach Anspruch 1, wobei der Innenbehälter (1) mehreckig ausgebildet ist und vorzugsweise abgerundete Ecken und/oder abgerundete Kanten aufweist.

3. Wärmespeicher nach Anspruch 1, wobei der Innenbehälter (1) im Querschnitt ovalförmig ausgebildet ist und vorzugsweise im Querschnitt die Form eines lang gestreckten Ovals hat.

4. Wärmespeicher nach einem der Ansprüche 1 bis 3, wobei das Verhältnis der Fläche von zumindest einer, empfohtenermaßen von jeder der beiden großflächigen Seitenwände (2) zu der Fläche jeder der kleinflächigen Seitenwände (3, 4) mindestens 1,5:1, vorzugsweise mindestens 2:1 und bevorzugt mindestens 2,5:1 beträgt.

5. Wärmespeicher nach einem der Ansprüche 1 bis 4, wobei der Innenbehälter (1) durch Blasformen oder durch Rotationsformen hergestellt ist.

6. Wärmespeicher nach einem der Ansprüche 1 bis 5, wobei der Innenbehälter(1) auf seiner Außenoberfläche mit einer Verstärkungsschicht (5) versehen ist, und wobei die Verstärkungsschicht (5) zwischen den Versteifungselementen (6) und dem Innenbehälter (1) angeordnet ist, wobei die Verstärkungsschicht (5) vorzugsweise durch Umwickeln bzw. Umhüllen des Innenbehälters (1) mit einem (zweiten) Faserverbundmaterial erzeugt ist.

7. Wärmespeicher nach einem der Ansprüche 1 bis 6, wobei die Wandstärke eines auf einer großflächigen Seitenwand (2) aufgebrachten Versteifungselementes (6) von zumindest zwei gegenüberliegenden Seiten der zugeordneten großflächigen Seitenwand (2) zur Mitte dieser Seitenwand (2) hin zunimmt, bevorzugt kontinuierlich zunimmt.

8. Wärmespeicher nach einem der Ansprüche 1 bis 7, wobei die Versteifungselemente (6) konvex nach außen gewölbt ausgebildet sind und das Bandagenmaterial (7) bzw. das (erste) Faserverbundmaterial entlang der Wölbung bzw. parallel zur Wölbung der Versteifungselemente (6) um das Aggregat aus Innenbehälter (1) und Versteifungselementen (6) gewickelt wird.

9. Wärmespeicher nach einem der Ansprüche 1 bis 8, wobei die Versteifungselemente (6) aus Kunststoff, bevorzugt aus Kunststoffschaum bestehen.

10. Wärmespeicher nach einem der Ansprüche 1 bis 9, wobei das zumindest eine einer großflächigen Seitenwand (2) zugeordnete Versteifungselement (6) zumindest 50 %, vorzugsweise zumindest 70 % und bevorzugt zumindest 80 % der Fläche der zugeordneten großflächigen Seitenwand (2) abdeckt.

11. Wärmespeicher mit einem Innenbehälter (1) zur Aufnahme eines Wärmeträgermedium, wobei der Innenbehälter (1) zumindest zwei gegenüberliegende großflächige Seitenwände (2) sowie weitere kleinflächige Seitenwände (3, 4) aufweist und wobei die Innenoberflächen der großflächigen Seitenflächen (2) durch verstärkungsfaserhaltige flächige Verstärkungselemente flächig verstärkt sind.

12. Wärmespeicher nach Anspruch 11, wobei die flächigen Verstärkungselemente Matten aus Faser-Kunststoff-Verbundmaterial sind.

13. Wärmespeicher nach einem der Ansprüche 1 bis 12, wobei die flächigen Verstärkungselemente als vorgefertigte Komponenten im Zuge der Herstellung des Innenbehälters (1) an den Innenoberflächen der großflächigen Seitenwände (2) fixiert sind.

14. Wärmespeicher nach einem der Ansprüche 1 bis 13, wobei in zumindest einer der beiden gegenüberliegenden großflächigen Seitenwände (2) des Innenbehälters (1) eine Mehrzahl von Vertiefungen (10) ausgebildet ist und wobei die Böden (11) der Vertiefungen (10) mit der Innenseite der gegenüberliegenden großflächigen Seitenwand (2) des Innenbehälters (1) verbunden sind, vorzugsweise verschweißt sind.

15. Wärmespeicher nach Anspruch 14, wobei in beiden gegenüberliegenden großflächigen Seitenwänden (2) jeweils eine Mehrzahl von Vertiefungen (10) ausgebildet ist und wobei die Böden (11) der Vertiefungen (10) in der einen großflächigen Seitenwand (2) mit den Böden (11) der Vertiefungen (10) in der anderen großflächigen Seitenwand (2) verbunden sind, vorzugsweise verschweißt sind.

## Geänderte Patentansprüche

### Geänderte Patentansprüche gemäss Regel 137(2) EPÜ.

**1.** Wärmespeicher mit einem Innenbehälter (1) zur Aufnahme eines Wärmeträgermediums, wobei der Innenbehälter (1) zumindest zwei gegenüberliegende großflächige Seitenwände (2) sowie weitere kleinflächige Seitenwände (3, 4) aufweist,
wobei auf der Außenoberfläche jeder großflächigen Seitenwand (2) zumindest ein Versteifungselement (6) aufgebracht ist,
wobei die Wandstärke jedes Versteifungselementes (6) zumindest bereichsweise zumindest das Doppelte, vorzugsweise zumindest das Dreifache der Wandstärke der zugeordneten großflächigen Seitenwand (2) des Innenbehälters (1) beträgt,
wobei die Versteifungselemente (6) durch Umwickeln bzw. Umhüllen des Aggregates aus Versteifungselementen (6) und Innenbehälter (1) mit einem Faser-Kunststoff-Verbundmaterial an dem Innenbehälter (1) fixiert sind und
wobei die Versteifungselemente (6) und/oder der Innenbehälter (1) aus Kunststoff bestehen, wobei ein thermoplastischer Kunststoff des Faser-Kunststoff-Verbundmaterials auf diesen Kunststoff aufgeschmolzen ist.

**11.** Wärmespeicher mit einem Innenbehälter (1) zur Aufnahme eines Wärmeträgermediums, wobei der Innenbehälter (1) zumindest zwei gegenüberliegende großflächige Seitenwände (2) sowie weitere kleinflächige Seitenwände (3, 4) aufweist und wobei die Innenoberflächen der großflächigen Seitenflächen (2) durch verstärkungsfaserhaltige flächige Verstärkungselemente flächig verstärkt sind,
wobei die flächigen Verstärkungselemente Matten aus Faser-Kunststoff-Verbundmaterial sind und
wobei die Verstärkungselemente an den Innenoberflächen durch Blasformen oder Rotationsformen fixiert sind.
